# EUROPEAN PATENT APPLICATION

(11) **EP 4 546 293 A1**
(43) Date of publication of application: **30.04.2025**
(21) Application number: 23826306.5
(22) Date of filing: 16.06.2023
(51) Int. Cl.: G06V 30/18

(54) **DATA PROCESSING METHOD FOR PHOTOVOLTAIC SYSTEM, DATA PROCESSING TERMINAL AND STORAGE MEDIUM**

(30) Priority: 21.06.2022 CN 202210705278
(71) Applicant: ZTE Corporation, Shenzhen, Guangdong 518057 (CN)
(72) Inventor: XIONG, Yong, Shenzhen, Guangdong 518057 (CN); XIAO, Shengxian, Shenzhen, Guangdong 518057 (CN); ZHANG, Dedi, Shenzhen, Guangdong 518057 (CN); WANG, Yong, Shenzhen, Guangdong 518057 (CN)
(74) Representative: Ziebig Hengelhaupt Intellectual Property Attorneys Patentanwaltskanzlei PartGmbB
(86) International application number: PCT/CN2023/100790
(87) International publication number: WO 2023/246657

(57) **Abstract**

Disclosed in the present application are a data processing method for a photovoltaic system, a data processing terminal and a storage medium. The data processing method comprises: acquiring a layout image, the layout image comprising a plurality of information entry areas carrying identification information (S100); identifying the identification information in the information entry areas, so as to obtain area serial numbers, serial number information and grouping information of the information entry areas (S200); identifying a position relationship of the information entry areas, so as to obtain photovoltaic coordinate information of the information entry areas (S300); and sending the grouping information, the area serial numbers, the photovoltaic coordinate information and the serial number information to a centralized management unit in a photovoltaic system, so that the centralized management unit generates a network configuration table according to the grouping information, and, according to the network configuration table, distributes to protocol conversion units configuration information corresponding to photovoltaic units, photovoltaic combiner boxes and the protocol conversion units (S400).

## Description

### CROSS-REFERENCE TO RELATED APPLICATIONS

The present application is proposed based on and claims the priority of the Chinese patent application with the application No. 202210705278.3 filed on June 21, 2022, the entire contents of which are incorporated herein by reference.

### TECHNICAL FIELD

The present application relates to the technical field of photovoltaics, in particular to a data processing method for a photovoltaic system, a data processing terminal and a storage medium.

### BACKGROUND

With the global rise of 5G network construction, changes in a 5G network architecture have brought new challenges to communication power supply networks. In terms of network deployment, there are problems such as increased station power consumption, difficulty in electricity introduction, increased demands for power devices and battery storage, increased number of stations, and difficulty in acquiring new stations; and in terms of network operation and maintenance, there has been an increase in station power consumption and quantity, resulting in the problems such as a sharp increase in maintenance costs and electricity bills. In order to solve the above problems, operators generally choose a solution of staking photovoltaics to power sources in stations, that is, photovoltaic systems are stacked traditional communication power sources to achieve common power supply. However, due to the huge scale of 5G stations, there may be problems such as inconvenient transportation or limited operating space of stations, which affects network configuration management of the 5G stations. Moreover, a grouping configuration of power line communication (PLC) implemented by traditional technology has no correspondence relationship with physical objects or real scenes. In either initial configuration or subsequent daily operation and maintenance, when node devices are replaced and repaired, exploration, searching and positioning are necessary, and it is time-consuming and laborious especially in large-scale photovoltaic power generation scenarios, which is not conducive to personnel supervision and operations.

### SUMMARY

Embodiments of the present application provide a data processing method for a photovoltaic system, a data processing terminal and a storage medium.

In a first aspect, an embodiment of the present application provides a data processing method for a photovoltaic system. The photovoltaic system includes a center supervise unit (CSU) as well as smart photovoltaic units (SPU), photovoltaic convergence boxes (PCB) and smart protocol convert units (SPCU) used as nodes for networking. The data processing method includes: acquiring a layout image, the layout image including a plurality of information entry areas carrying identification information; identifying the identification information in the information entry areas, so as to obtain area serial numbers, serial number information and grouping information of the information entry areas, wherein the area serial numbers are used to distinguish between node categories in the photovoltaic system, the serial number information is used to represent serial numbers of nodes, and the grouping information is used to represent a grouping condition of nodes in the photovoltaic system; identifying a position relationship of the information entry areas, so as to obtain photovoltaic coordinate information of the information entry areas; and sending the grouping information, the area serial numbers, the photovoltaic coordinate information and the serial number information to the center supervise unit in the photovoltaic system, so that the center supervise unit generates a network configuration table according to the grouping information, and distributes, according to the network configuration table, to the smart protocol convert units configuration information corresponding to the smart photovoltaic units, the photovoltaic convergence boxes and the smart protocol convert units.

In a second aspect, an embodiment of the present application provides a data processing terminal, including at least one processor and a memory used for communication connection with the at least one processor. The memory stores instructions executable by the at least one processor, and the instructions are executed by the at least one processor to enable the at least one processor to execute the data processing method as described in the first aspect.

In a third aspect, an embodiment of the present application provides a computer-readable storage medium, storing computer-executable instructions. The computer-executable instructions are used to enable a computer to execute the data processing method for the photovoltaic system as described in the first aspect.

### BRIEF DESCRIPTION OF DRAWINGS

Fig. 1 is a schematic diagram of a system architecture of a photovoltaic system provided by an embodiment of the present application.
Fig. 2 is a schematic diagram of a node configuration table provided by an embodiment of the present application.
Fig. 3 is a schematic diagram of a node configuration table provided by another embodiment of the present application.
Fig. 4 is a schematic diagram of a node configuration table provided by another embodiment of the present application.
Fig. 5 is a flow diagram of a data processing method for a photovoltaic system provided by an embodiment of the present application.
Fig. 6 is a method flow diagram of step S100 in Fig. 5.
Fig. 7 is a method flow diagram of step S120 in Fig. 6.
Fig. 8 is a flow diagram of a data processing method for a photovoltaic system provided by another embodiment of the present application.
Fig. 9 is a method flow diagram of step S510 in Fig. 8.
Fig. 10 is a method flow diagram of step S520 in Fig. 8.
Fig. 11 is a method flow diagram of step S540 in Fig. 8.
Fig. 12 is a schematic diagram of a layout image provided by an example of the present application.
Fig. 13 is a schematic diagram of a preset node template provided by another example of the present application.
Fig. 14 is a schematic structural diagram of a data processing terminal provided by an embodiment of the present application.

### DETAILED DESCRIPTION

To make the objectives, technical solutions, and advantages of the present application clearer, the present application is further explained in detail below with reference to the accompanying drawings and embodiments. It is to be understood that the specific embodiments described here are only used for explaining the present application, instead of limiting the present application.

It is to be noted that, in the description of the embodiments of the present application, the terms "first", "second", and the like in the specification, claims and accompanying drawings above are used to distinguish between similar objects, and are not to be understood as indicating or implying a relative importance or implicitly specifying the number of technical features indicated or implicitly specifying a precedence relationship of the technical features indicated. "At least one" refers to one or more, and "plurality of" refers to two or more. "And/or" describes the association relationship of associated objects, which means that there can be three kinds of relationships, for example, A and/or B can mean the situations of A alone, A and B at the same time, and B alone. A and B may be singular or plural. The character "/" universally indicates that associated objects are in an "or" relationship. Although functional modules are divided in a schematic diagram of an apparatus and a logical sequence is shown in a flow diagram, in certain cases, the steps shown or described may be executed in module division different from that in the apparatus or in a different order than in the flow diagram.

In addition, the technical features involved in various implementations of the present application described below may be combined with each other as long as they do not conflict with each other.

Embodiments of the present application provide a data processing method for a photovoltaic system, a data processing terminal and a computer-readable storage medium. A layout image including a plurality of information entry areas is acquired, identification information carried in the information entry areas and a position relationship of the information entry areas are identified to obtain area serial numbers, serial number information, grouping information and photovoltaic coordinate information of the information entry areas, and thus node categories in the photovoltaic system can be distinguished according to the area serial numbers, a grouping condition of nodes in the photovoltaic system is obtained according to the grouping information, and device information and the position relationship in the photovoltaic system are obtained. Finally, the grouping information, the area serial numbers, the photovoltaic coordinate information and the serial number information are sent to a center supervise unit, so that the center supervise unit can generate a network configuration table according to the grouping information, and distribute, according to the network configuration table, to smart protocol convert units configuration information corresponding to smart photovoltaic units, photovoltaic convergence boxes and the smart protocol convert units. The photovoltaic system is managed by the center supervise unit, and the management efficiency for the photovoltaic system is improved.

The embodiments of the present application are further illustrated below in conjunction with the accompanying drawings.

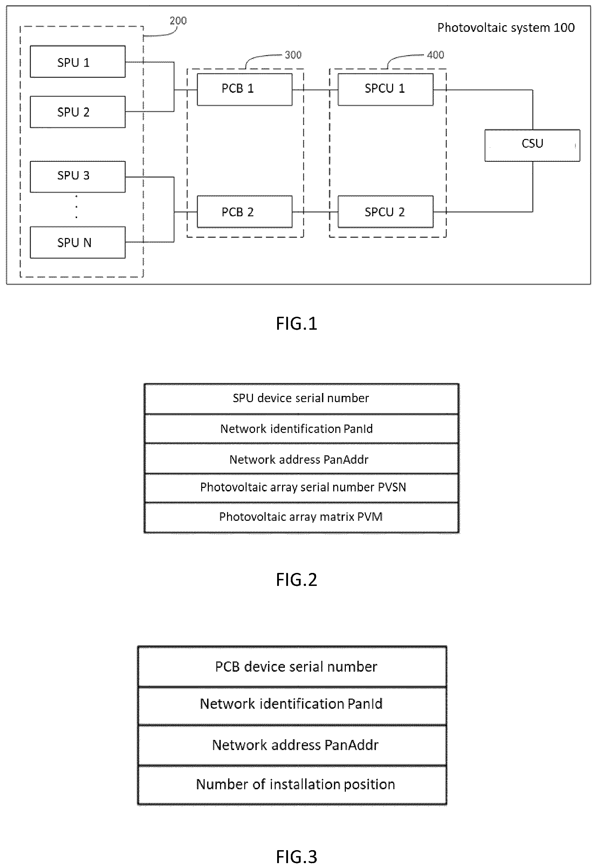

Referring to Fig. 1, Fig. 1 is a schematic diagram of a system architecture of a photovoltaic system provided by an embodiment of the present application.

In the embodiment of Fig. 1, the photovoltaic system 100 includes smart photovoltaic units 200, photovoltaic convergence boxes 300 and smart protocol convert units 400 used as nodes for networking as well as a center supervise unit 500.

In one embodiment, a plurality of smart photovoltaic units 200 are electrically connected and converged to the photovoltaic convergence boxes 300 and then are connected into the smart protocol convert units 400 to form a grouped sub-system, a plurality of groups of such sub-systems constitute a complete photovoltaic system 100 together with one center supervise unit 500, and thus one grouped sub-system is composed of one photovoltaic convergence box 300, one smart protocol convert unit 400 and at least one smart photovoltaic unit 200.

It would be appreciated that, as shown in Fig. 1, two grouped sub-systems are included, a first grouped sub-system includes a smart photovoltaic unit 1, a smart photovoltaic unit 2, a photovoltaic convergence box 1 and a smart protocol convert unit 1, a second grouped sub-system includes a smart photovoltaic unit 3 to a smart photovoltaic unit N, a photovoltaic convergence box 2 and a smart protocol convert unit 2, and the photovoltaic system 100 is composed of the first grouped sub-system, the second grouped sub-system and the center supervise unit 500.

It is to be noted that, in the photovoltaic system 100, the smart photovoltaic units 200, the photovoltaic convergence boxes 300 and the smart protocol convert units 400 are connected with one another through power line communication (PLC), the smart protocol convert units 400 and the center supervise unit 500 are connected with each other through a controller area network (CAN) or a field bus such as RS485, besides, all the smart photovoltaic units 200, photovoltaic convergence boxes 300 and smart protocol convert units 400 realize interaction and management through power line communication, and thus the communication cost is lowered.

In one embodiment, configuration information related to physical layouts further needs to be added for each node, especially the smart photovoltaic units 200, in the photovoltaic system 100, such as a photovoltaic array (where the smart photovoltaic units 200 are located) serial number (PVSN) and a photovoltaic array matrix (PVM) in this array matrix (the photovoltaic array matrix may also be decomposed into two planar coordinate values PVM_X and PVM_Y), selective installation positions of a PCB and an SPCU and other information, all for facilitating the simplicity and visuality of operation and maintenance.

It would be appreciated that, the PVSN is an identification code of a photovoltaic array region, and the PVM is a coordinate position identification of a node in an array and is used to represent which row and which column the node is located in the array.

Referring to Fig. 2 to Fig. 4, configuration table information of each node device is as follows.

Referring to Fig. 2, Fig. 2 is a node configuration table for an SPU.

In one embodiment, the node configuration table for the SPU includes layout information such as a DSN, Panld, PanAddr, a PVSN and a PVM of this node.

Referring to Fig. 3, Fig. 3 is a node configuration table for a PCB.

In one embodiment, the node configuration table for the PCB includes a DSN, Panld, PanAddr, and selective installation position information of this node.

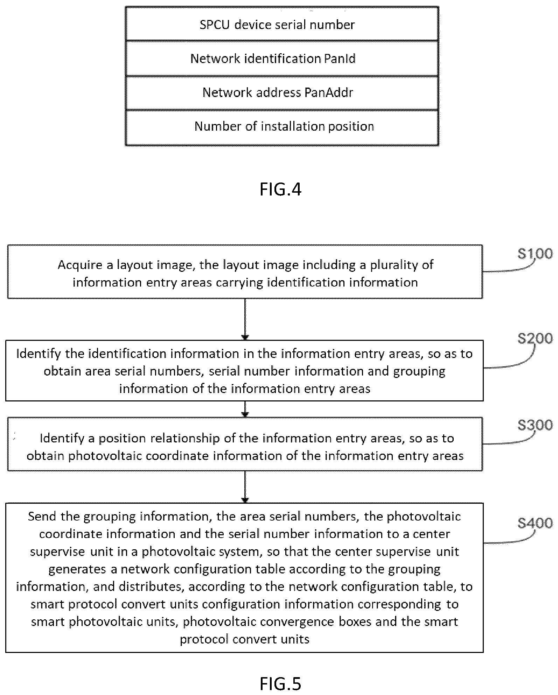

Referring to Fig. 4, Fig. 4 is a node configuration table for an SPCU.

In one embodiment, the node configuration table for the SPCU includes a DSN, Panld, PanAddr, and selective installation position information of this node.

The photovoltaic system 100 and application scenarios described in the embodiment of the present application are to illustrate the technical solution of the embodiment of the present application more clearly, and do not constitute a limitation on the technical solution provided by the embodiment of the present application. It is known to those skilled in the art that with the evolution of network topology and the emergence of new application scenarios, the technical solution provided by the embodiment of the present application is also applicable to similar technical problems.

A person skilled in the art can understand that, the photovoltaic system shown in Fig. 1 does not constitute a limitation to the embodiment of the present application, and may include more components or fewer components than those shown in the figure, or some components may be combined, or a different component deployment may be used.

Based on the structure of the above system architecture, various embodiments of a data processing method for a photovoltaic system 100 of the present application are proposed below.

Referring to Fig. 5, Fig. 5 is a flow diagram of a data processing method for a photovoltaic system provided by an embodiment of the present application. The data processing method for the photovoltaic system includes, but is not limited to, steps S100-S400.

It is to be noted that, the photovoltaic system includes a center supervise unit as well as smart photovoltaic units, photovoltaic convergence boxes and smart protocol convert units used as nodes for networking.

At S100: a layout image is acquired, the layout image including a plurality of information entry areas carrying identification information.

At S200: the identification information in the information entry areas is identified, so as to obtain area serial numbers, serial number information and grouping information of the information entry areas.

It is to be noted that, the area serial numbers are used to distinguish between node categories in the photovoltaic system, the serial number information is used to represent serial numbers of nodes, and the grouping information is used to represent a grouping condition of nodes in the photovoltaic system.

It would be appreciated that, the area serial numbers are photovoltaic array serial numbers.

In one embodiment, the identification information in the information entry areas is identified, so as to obtain the area serial numbers, the serial number information and the grouping information of the information entry areas, and thus an arrangement relationship of nodes in the photovoltaic system can be judged accurately.

It is to be noted that, a method of identifying the identification information adopts an image recognition technology, wherein the image recognition technology may be an optical character recognition (OCR) technology or a handwritten character recognition (HCR) technology.

At S300: a position relationship of the information entry areas is identified, so as to obtain photovoltaic coordinate information of the information entry areas.

It is to be noted that, the photovoltaic coordinate information is a photovoltaic array matrix.

At S400: the grouping information, the area serial numbers, the photovoltaic coordinate information and the serial number information are sent to the center supervise unit in the photovoltaic system, so that the center supervise unit generates a network configuration table according to the grouping information, and distributes, according to the network configuration table, to the smart protocol convert units configuration information corresponding to the smart photovoltaic units, the photovoltaic convergence boxes and the smart protocol convert units.

It is to be noted that, serial numbers of the smart photovoltaic units, serial numbers of the photovoltaic convergence boxes and serial numbers of the smart protocol convert units in the present embodiment are device serial numbers (DSNs) of respective nodes.

In one embodiment, the grouping information, the area serial numbers, the photovoltaic coordinate information and the serial number information are sent to the center supervise unit, so that the center supervise unit generates the network configuration table according to the grouping information, and distributes to the smart protocol convert units the configuration information corresponding to the smart photovoltaic units, the photovoltaic convergence boxes and the smart protocol convert units through a CAN bus, and thus the nodes in the photovoltaic system are synchronously configured.

It is to be noted that, the center supervise unit distributes the network configuration table to the smart protocol convert units through the CAN bus first, and then the smart protocol convert units are used to distribute the configuration information corresponding to all the nodes through PLC network broadcasting, so as to achieve synchronous configuration from top to bottom.

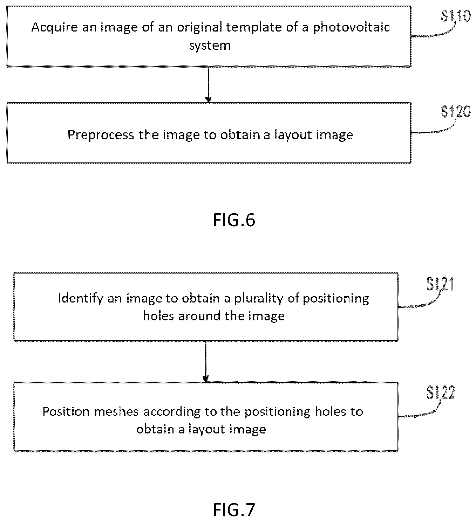

Referring to Fig. 6, Fig. 6 is illustration for step S100 in Fig. 5, and step S100 includes, but is not limited to, step S110 to step S120.

At S110: an image of an original template of the photovoltaic system is acquired.

It is to be noted that, the original template is provided with a plurality of meshes according to a preset row-column relationship, and the area serial numbers, the serial number information and the grouping information are entered into the meshes to form the information entry areas.

At S120: the image is preprocessed to obtain the layout image.

In one embodiment, the image of the original template of the photovoltaic system is acquired first, then the image is preprocessed, so as to obtain the layout image corresponding to the original template, and a precise mapping relationship between respective nodes and logic configurations in the photovoltaic system is achieved.

It is to be noted that, the original template of the photovoltaic system may be a photo or drawing paper or the like of the photovoltaic system, and the dimension of the photo or drawing paper may be 297 mm×420 mm or 210 mm×297 mm, which is convenient for classified entry of node information and convenient for subsequent scanning recognition and configuration generation.

In one embodiment, the serial number information in the meshes may be directly input by handwriting, or pasted on a device of the photovoltaic system by using a barcode or QR code label, and thus the difficulty and the error rate of information entry are lowered.

In one embodiment, the area serial numbers in the meshes may be printed digital labels which are pasted or directly input by handwriting.

It is to be noted that, a correct value must be input into nodes of the smart photovoltaic units, a default value is 1, 0 is input into nodes of the photovoltaic convergence boxes consistently, while for nodes of the smart protocol convert units, the area codes are kept blank and forbidden from inputting, and when it is required to enter different node information into the same template due to the lack of site templates, node categories may be distinguished through the area serial numbers, and thus the mixing of the node information is avoided.

In one embodiment, the grouping information in the meshes may be printed digital labels which are pasted or directly handwritten, and SPUs, PCBs and SPCUs which are electrically connected in the same group have the same group number, so that respective nodes in the photovoltaic system are precisely grouped.

Referring to Fig. 7, Fig. 7 is illustration for step S120 in Fig. 6, and step S120 includes, but is not limited to, step S121 to step S122.

At S121: the image is identified to obtain a plurality of positioning holes around the image.

It is to be noted that, the quantity of the positioning holes may be 4, 5 or 6, in the present embodiment, the quantity of the positioning holes is 4, and the 4 positioning holes are arranged at vertices of four corners of the image evenly.

At S122: the meshes are positioned according to the positioning holes to obtain the layout image.

In one embodiment, after all information is entered into the meshes, the image is identified to obtain the plurality of positioning holes around the image, the meshes are positioned according to the positioning holes to determine whether the meshes are complete or not, so as to obtain the layout image, and the situations of missing and the like of the layout image are avoided.

It is to be noted that, the image is identified by taking photos of images of the entered information for identification, in the process of taking photos for identification, image contents and the positioning holes must be clear and visible, and thus the meshes are positioned, and the complete layout image is obtained.

In one embodiment, the preset row-column relationship includes M rows and N columns into which the layout image is divided in a region defined by the positioning holes, and thus the beauty and cleanliness of the layout image are improved, the respective meshes have an equal area, and the information is completely entered.

It would be appreciated that, the preset row-column relationship may include 5 rows and 6 columns, 4 rows and 5 columns, or 6 rows and 8 columns or the like into which the layout image is divided, which is not specifically limited in the present embodiment.

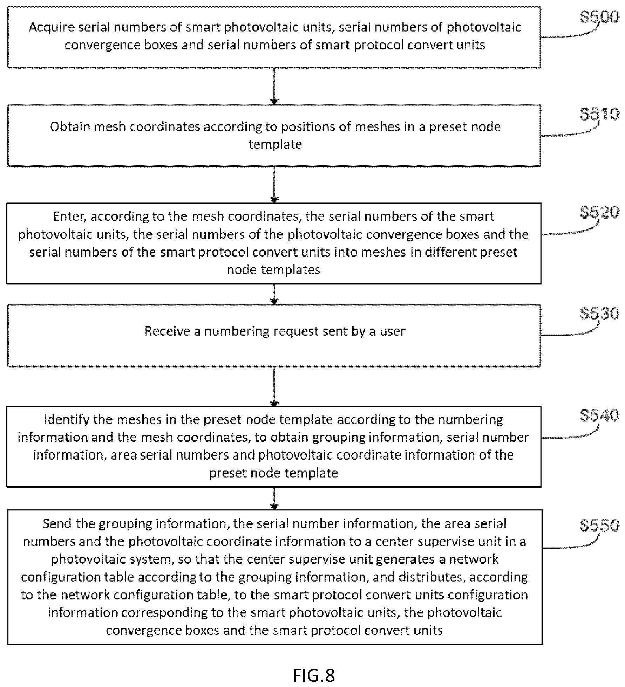

Referring to Fig. 8, Fig. 8 is a flow diagram of a data processing method for a photovoltaic system provided by another embodiment of the present application. A data processing method for the photovoltaic system includes, but is not limited to, steps S500-S550.

It is to be noted that, the photovoltaic system includes a center supervise unit as well as smart photovoltaic units, photovoltaic convergence boxes and smart protocol convert units used as nodes for networking.

At S500: the serial numbers of the smart photovoltaic units, the serial numbers of the photovoltaic convergence boxes and the serial numbers of the smart protocol convert units are acquired.

It is to be noted that, the serial numbers of the smart photovoltaic units, the serial numbers of the photovoltaic convergence boxes and the serial numbers of the smart protocol convert units in the present embodiment are device serial numbers of respective nodes.

At S510: mesh coordinates are obtained according to positions of meshes in a preset node template.

At S520: according to the mesh coordinates, the serial numbers of the smart photovoltaic units, the serial numbers of the photovoltaic convergence boxes and the serial numbers of the smart protocol convert units are entered into meshes in different preset node templates.

It is to be noted that, different node types in the smart photovoltaic units are correspondingly provided with different preset node templates, and therefore, the preset node templates corresponding to the smart photovoltaic units, the photovoltaic convergence boxes and the smart protocol convert units are different.

At S530: a numbering request sent by a user is received.

It is to be noted that, the numbering request is used to number meshes in the preset node template after entering to obtain numbering information.

At S540: the meshes in the preset node template are identified according to the numbering information and the mesh coordinates, to obtain grouping information, serial number information, area serial numbers and photovoltaic coordinate information of the preset node template.

It is to be noted that, the grouping information is used to represent a grouping condition of nodes in the photovoltaic system.

At S550: the grouping information, the serial number information, the area serial numbers and the photovoltaic coordinate information are sent to the center supervise unit in the photovoltaic system, so that the center supervise unit generates a network configuration table according to the grouping information, and distributes, according to the network configuration table, to the smart protocol convert units configuration information corresponding to the smart photovoltaic units, the photovoltaic convergence boxes and the smart protocol convert units.

In one embodiment, the serial numbers of the smart photovoltaic units, the serial numbers of the photovoltaic convergence boxes and the serial numbers of the smart protocol convert units are acquired first, and the mesh coordinates are obtained according to the positions of the meshes in the preset node template, which is convenient for entry of information of respective nodes of the smart photovoltaic units. The serial numbers of the smart photovoltaic units, the serial numbers of the photovoltaic convergence boxes and the serial numbers of the smart protocol convert units are entered into meshes in different preset node templates according to the mesh coordinates, a precise mapping relationship between physical objects and logic configurations is established, respective nodes in different photovoltaic systems correspond to different preset node templates, and different node information is entered accurately. Afterwards, the numbering request sent by the user is received, the meshes in the preset node template are identified according to the numbering information and the mesh coordinates, to obtain the grouping information, the serial number information, the area serial numbers and the photovoltaic coordinate information of the preset node template, and respective nodes in the photovoltaic system are grouped. Finally, the grouping information, the serial number information, the area serial numbers and the photovoltaic coordinate information are sent to the center supervise unit in the photovoltaic system, so that the center supervise unit generates the network configuration table according to the grouping information, and distributes, according to the network configuration table, to the smart protocol convert units the configuration information corresponding to the smart photovoltaic units, the photovoltaic convergence boxes and the smart protocol convert units, which is convenient for the center supervise unit to manage the photovoltaic system.

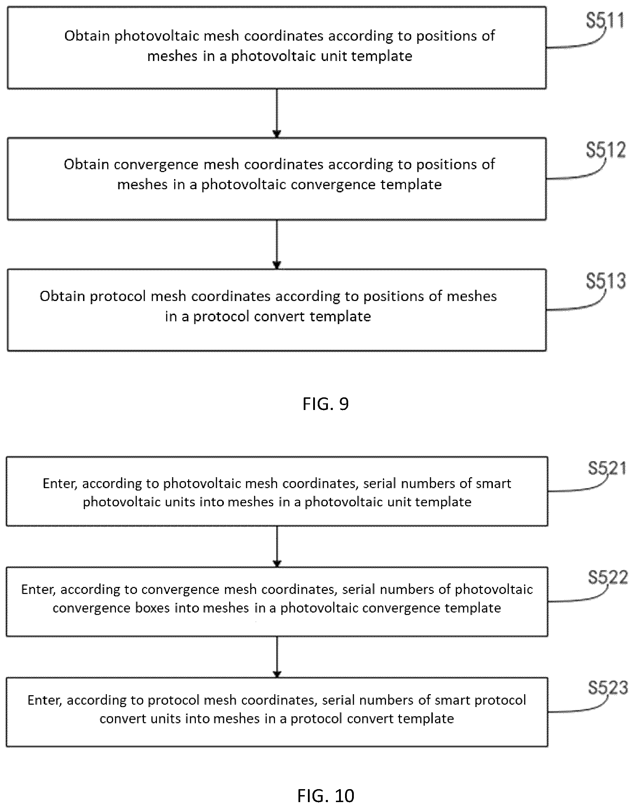

Referring to Fig. 9, Fig. 9 is illustration for step S510 in Fig. 8, and step S510 includes, but is not limited to, step S511 to step S513.

It is to be noted that, the preset node template includes a photovoltaic unit template, a photovoltaic convergence template and a protocol convert template, and the mesh coordinates include photovoltaic mesh coordinates, convergence mesh coordinates and protocol mesh coordinates.

At S511: the photovoltaic mesh coordinates are obtained according to positions of meshes in the photovoltaic unit template.

At S512: the convergence mesh coordinates are obtained according to positions of meshes in the photovoltaic convergence template.

At S513: the protocol mesh coordinates are obtained according to positions of meshes in the protocol convert template.

In one embodiment, the different photovoltaic mesh coordinates, convergence mesh coordinates and protocol mesh coordinates are obtained according to the positions of the meshes in the photovoltaic unit template, the positions of the meshes in the photovoltaic convergence template and the positions of the meshes in the protocol convert template, and thus node relationships in the photovoltaic system are arranged accurately.

In one embodiment, the photovoltaic unit template is a digital mirror image of a photovoltaic array where nodes of the smart photovoltaic units in the photovoltaic system are located, for example, assuming that the photovoltaic unit template has M*N meshes, then it corresponds to a photovoltaic array with an M*N matrix, and each mesh position corresponds to a coordinate position of each node of the smart photovoltaic units installed in the photovoltaic array.

It is to be noted that, M and N may be defined randomly according to actual situations, extension after defining is also supported, and it is guaranteed that any scale of SPU networking can be satisfied.

Referring to Fig. 10, Fig. 10 is illustration for step S520 in Fig. 8, and step S520 includes, but is not limited to, step S521 to step S523.

At S521: according to the photovoltaic mesh coordinates, the serial numbers of the smart photovoltaic units are entered into the meshes in the photovoltaic unit template.

At S522: according to the convergence mesh coordinates, the serial numbers of the photovoltaic convergence boxes are entered into the meshes in the photovoltaic convergence template.

At S523: according to the protocol mesh coordinates, the serial numbers of the smart protocol convert units are entered into the meshes in the protocol convert template.

In one embodiment, the serial numbers of the smart photovoltaic units, the serial numbers of the photovoltaic convergence boxes and the serial numbers of the smart protocol convert units are entered into the meshes in the corresponding photovoltaic unit template, the meshes in the corresponding photovoltaic convergence template and the meshes in the corresponding protocol convert template respectively according to the photovoltaic mesh coordinates, the convergence mesh coordinates and the protocol mesh coordinates, and thus different node information is entered, which facilitates viewing and management.

In one embodiment, the serial numbers of the photovoltaic convergence boxes are sequentially entered into the meshes in the photovoltaic convergence template, for example, assuming that the template has M*N meshes, it represents that entry of M*N photovoltaic convergence box nodes may be supported, and similarly, the serial numbers of the smart protocol convert units are also entered into the meshes in the protocol convert template in accordance with the same way as the photovoltaic convergence boxes.

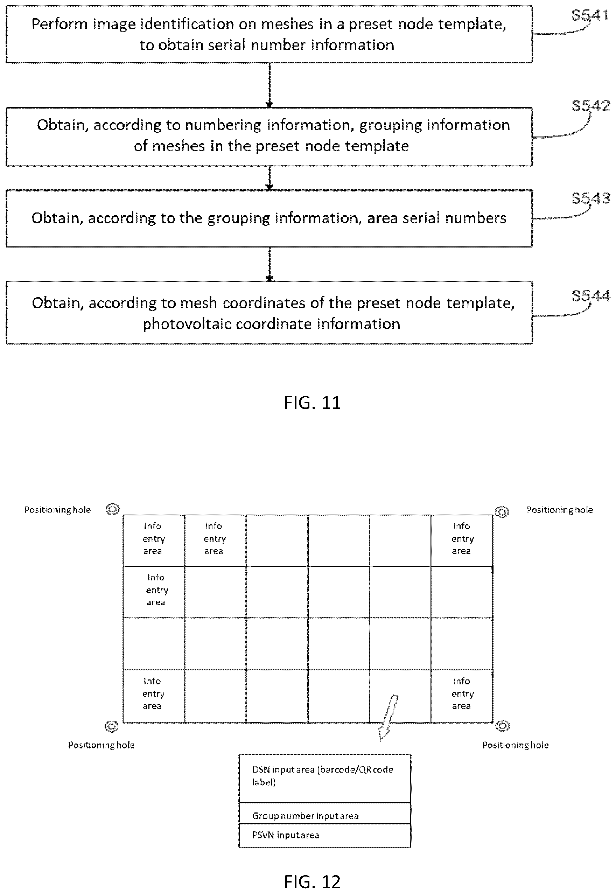

Referring to Fig. 11, Fig. 11 is illustration for step S540 in Fig. 8, and step S540 includes, but is not limited to, step S541 to step S544.

At S541: image identification is performed on the meshes in the preset node template, to obtain the serial number information.

In one embodiment, image identification is performed on the meshes in the photovoltaic unit template, the meshes in the photovoltaic convergence template and the meshes in the protocol convert template in the preset node template, so as to obtain the serial number information of the photovoltaic unit template, the serial number information of the photovoltaic convergence template and the serial number information of the protocol convert template.

At S542: according to the numbering information, the grouping information of the meshes in the preset node template is obtained.

In one embodiment, the meshes in the preset node template are grouped according to the numbering information obtained from the numbering request of the user, and thus the grouping information of the respective meshes is obtained, which facilitates subsequent sending of the grouping information to the center supervise unit.

At S543: according to the grouping information, the area serial numbers are obtained.

It is to be noted that, the area serial numbers are used to represent a correspondence relationship between the meshes in the preset node template and the smart photovoltaic units.

At S544: according to the mesh coordinates of the preset node template, the photovoltaic coordinate information is obtained.

It is to be noted that, the photovoltaic coordinate information is used to represent a correspondence relationship between the photovoltaic mesh coordinates and the mesh coordinates.

In one embodiment, the grouping information, the area serial numbers, the photovoltaic coordinate information and the serial number information are sent to the center supervise unit, so that the center supervise unit generates the network configuration table according to the grouping information, and distributes to the smart protocol convert units the configuration information corresponding to the smart photovoltaic units, the photovoltaic convergence boxes and the smart protocol convert units through a CAN bus, and thus the nodes in the photovoltaic system are synchronously configured.

It is to be noted that, the center supervise unit distributes the network configuration table to the smart protocol convert units through a CAN bus first, and then the smart protocol convert units are used to distribute the configuration information corresponding to all the nodes through PLC network broadcasting, so as to achieve synchronous configuration from top to bottom.

To illustrate the flow of a data processing method for a photovoltaic system more clearly, it is illustrated below with examples.

### Example I:

Referring to Fig. 12, Fig. 12 is a schematic diagram of a layout image provided by an example of the present application.

To achieve safe, simple, rapid and accurate network configuration, first, the following design is required:
(1) device serial numbers (DSNs), as unique identifications of node devices in a network, are written into all devices such as SPUs, PCBs, SPCUs and a CSU when leaving factories.
(2) referring to a PLC module data book, PLC of the SPUs, the PCBs and the SPCUs is set as a point-to-multi-point MAC mode, different personal area network identifiers (Panld) are used in respective groups, and different personal area network addresses (PanAddr) are used in nodes within a group; and inter-group and intra-group broadcasting may further be achieved by setting target Panld and PanAddr as 0xFFFF values.
(3) a generation rule is configured: Panld directly uses group numbers of 2 groups, with their values being 0x01 and 0x02 respectively; and for 16-bit PanAddr, top 8 bits are Panld of a group, and bottom 8 bits are numbers of nodes within the group: 1-8 represent SPUs of No. 1-8, 0 represents a PCB, and 0xFF represents an SPCU.

Example I demonstrates an information entry process of a photovoltaic system, and the information entry process is as following steps 1 to 5:
Step 1: information entry: a plurality of layout images (a size of A3-A4 paper is recommended) are prepared, which are convenient for pasting or handwriting input, including:
   step 1.1: a device barcode or QR code label on a first device to be installed is taken off and pasted into a layout image;
   step 1.2: a group number of a group is handwritten, or a printed digital label is pasted;
   step 1.3: a PVSN is handwritten, or a printed digital label is pasted;
   step 1.4: the device is installed;
   step 1.5: information entry and installation of all devices are completed in sequence; and
   step 1.6: photo taking by a mobile phone: after all information entry is completed, all the layout images with the information entered are photographed to generate photos. Template contents and all positioning holes at edges shall be clear and visible.
Step 2: intelligent identification: the template photos are intelligently identified via a mobile phone application (APP) or netmanager software, to obtain information such as DSNs, PVSNs and PVMs, including:
   step 2.1: according to a position relationship of an information entry area, PVMs and numbering information are obtained;
   step 2.2: as for QR code or barcode labels in the information entry area, DSN information in the labels is recognized using an image recognition technology;
   step 2.3: as for digital labels in the information entry area, group numbers of groups or PVSN information is obtained by recognition using an OCR technology; and
   step 2.4: as for handwritten information in the information entry area, group numbers of groups or PVSN information is obtained by recognition using an HCR technology.
Step 3: configuration generation: configuration information tables of respective nodes are generated with the DSNs as indexes via an APP or netmanager software. Configuration information of respective nodes is collected to form a general network configuration table.
Step 4: configuration importing: the general network configuration table is imported into the CSU via an APP or netmanager software; and a system automatically imports the table into the SPCUs, the PCBs, the SPUs and other nodes grade by grade from top to bottom, so as to complete system configuration.
Step 5: configuration self-inspection: respective node devices are powered on to run; and if there are new node devices which are missed and not entered, the new node devices will actively broadcast to inform own DSNs after being connected into a PLC network so as to apply for network configuration. The CSU reminds opening personnel via audible and visual alarms. In this way, whether all the node devices have been configured is inspected.

In one embodiment, the layout images are suitable for a scenario where a system capacity is not very large, operations are simple and visual, technical requirements for engineering opening personnel are lower, and the labor cost for opening is also lower.

### Example II:

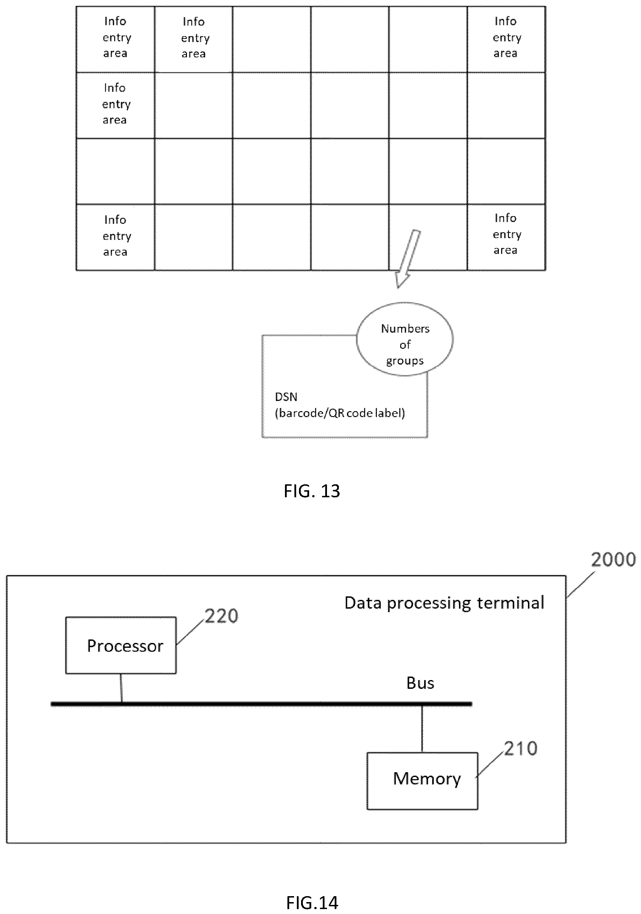

Referring to Fig. 13, Fig. 13 is a schematic diagram of a preset node template provided by another example of the present application.

To achieve safe, simple, rapid and accurate network configuration, first, the design method as shown in Example I is required, which is omitted here.

Example II demonstrates a process of another information entry method of a photovoltaic system, and the information entry process is as following steps 1 to 5:
Step 1: information entry: an opening configuration APP is operated to complete information entry, including:
   step 1.1: a template is generated according to a type of a device into which information is to be entered, to form a preset node template;
   step 1.2: a device barcode or QR code label of a first device to be installed is scanned to generate a DSN to be placed in a mesh;
   step 1.3: the device is actually installed;
   step 1.4: scanning and installation of all devices are completed in sequence;
   step 1.5: marking of same groups: all QR code labels divided into the same group are selected in batches to generate DSNs, and group number marks are made; and
   step 1.6: all marking of same groups is completed in sequence.
Step 2: intelligent identification: the APP continues to be operated to complete intelligent identification of DSN pictures, including:
   step 2.1: according to virtual template numbers, PVSN values are obtained;
   step 2.2: according to the position of the mesh, PVMs or numbering information is obtained; and
   step 2.3: as for QR code or barcode labels, DSN information is recognized using an image recognition technology.
Step 3: configuration generation: the APP continues to be operated, and configuration information tables of respective nodes are generated with the DSNs as indexes. Configuration information of respective nodes is collected to form a general network configuration table.
Step 4: configuration importing: the general network configuration table is imported into a CSU via the APP; and a system automatically imports the table into SPCUs, PCBs, SPUs and other nodes grade by grade from top to bottom. System configuration is completed.
Step 5: configuration self-inspection: if there are new node devices which are missed and not entered, the new node devices will actively broadcast to inform own DSNs after being connected into a PLC network so as to apply for network configuration. The CSU reminds opening personnel via audible and visual alarms. In this way, whether all the node devices have been configured is inspected.

In one embodiment, the preset node template supports a system application scenario with a super-large capacity, and physical objects such as a physical layout template and adhesive labels special for opening of each device are not needed, which is environmentally friendlier; and the deficiency is that engineering opening personnel shall be able to accurately operate opening configuration APP software, and the technical requirement is a little bit higher.

### Example III:

To achieve safe, simple, rapid and accurate network configuration, first, the design method as shown in Example I is required, which is omitted here.

Example III is a network configuration process for the layout image in the present application, and has the following steps 1 to 8:
Step 1: template preparation: 4 general templates with the size of A4 paper are prepared, and each template has 6*8 meshes inside. SPUs use two templates (each for each group of SPUs), and PCBs and SPCUs each use one template.
Step 2: template entry: a method of entering information one by one and installing device one by one is adopted, including:
   step 2.1: on the first template, information entry for 8 SPUs on a first photovoltaic array is completed: a QR code label of a device is pasted in 2*4 meshes at the upper left corner of the template, and then a number (value of 1) and a PVSN (value of 1) are input by handwriting;
   step 2.2: similarly, on the second template, information entry for 8 SPUs on a second photovoltaic array is completed; and a number (value of 2) and a PVSN (value of 2) are input by handwriting;
   step 2.3: on the third template, information of 2 PCBs is entered in sequence inside two leftmost meshes at the first row; and numbers (values of 1 and 2) and a PVSN (value of 0) are input by handwriting;
   step 2.4: on the fourth template, information of 2 SPCUs is entered in sequence inside two leftmost meshes at the first row; and numbers (values of 1 and 2) are input by handwriting, while a PVSN is not entered and kept blank;
   step 2.5: when there are few PCBs or SPCUs in a system, one template may be shared, for example, the SPCUs may be entered in meshes at the second row in the third template, so that templates are saved; and
   step 2.6: the four templates are photographed to obtain 4 template photos.
Step 3: the 4 template photos are sent to a mobile phone APP or netmanager software (or any other software which may perform configuration identification and generation, collectively referred to as APP software hereinafter).
Step 4: the APP software is operated to perform content identification on the template photos, so as to obtain information such as DSNs, the numbers and the PVSNs.
Step 5: according to an operation guidance of the APP software, a general network configuration table is generated.
Step 6: according to an operation guidance of the APP software, the general network configuration table is imported into a CSU.
It is to be noted that, the network configuration table may be remotely distributed through a protocol or distributed through on-site USB/wifi near-end connections.
Step 7: the CSU receives the general network configuration table and automatically distributes the table to respective SPCUs, and then the respective SPCUs automatically distribute the table to respective PCBs and SPU, so that the system configuration process is completed.
Step 8: after completing the configuration, the devices are reset to run normally. If the CSU reminds that there are node devices which are missed and not entered through audible and visual alarms, opening personnel verify by referring to the templates, supplement information entry and repeat the above steps, so as to ensure the correct and complete configuration.

### Example IV:

To achieve safe, simple, rapid and accurate network configuration, first, the design method as shown in Example I is required, which is omitted here.

Example IV is a network configuration process for the preset node template in the present application, and has the following steps 1 to 6:
Step 1: an opening configuration APP on a mobile phone is operated; and four virtual templates are selected, two for SPUs, one for PCBs and one for SPCUs.
Step 2: template entry: a method of entering information one by one and installing device one by one is adopted, including:
   step 2.1: a first SPU-type template is selected;
   step 2.2: a barcode or QR code label of an SPU device to be installed is scanned to obtain a device DSN;
   step 2.3: the SPU device is installed;
   step 2.4: scanning and mesh filling of all devices on the four templates are completed in sequence; and the devices are actually installed; and
   step 2.5: on the first SPU-type template, all 8 DSN pictures are selected, and a 1# group number mark is made; similarly, a 2# group number mark is made on 8 DSN pictures on the second template; 1# and 2# group number marks are made on two devices on the PCB/SPCU-type templates respectively; and marking of same groups for all the devices is completed.
Step 3: according to an operation guidance, an operation step of intelligent identification of the DSN pictures is executed to obtain information such as DSNs, PVSNs and PVMs.
Step 4: according to an operation guidance, generation of a general network configuration table is operated.
Step 5: according to an operation guidance, the mobile phone and a CSU are connected through a USB or wifi, and the general network configuration table in the APP is imported into the CSU; the CSU receives the general network configuration table and then automatically distributes the table to respective SPCUs; and then the respective SPCUs automatically distribute the table to respective PCBs and SPU, so that the system configuration is completed.
Step 6: after completing the configuration, the devices are reset to run normally. If the CSU reminds that there are node devices which are missed and not entered through audible and visual alarms, opening personnel verify by referring to the templates, and supplement information entry, so as to ensure the correct and complete configuration.

### Example V:

The methods demonstrated in Example I to Example IV require, when completing information entry, the entry of DSNs of SPU devices, SPCU devices and PCB devices for subsequent networking, and district division is performed manually to guarantee that devices in the same district have the same Panld. Such methods have no requirement for the value of Panld itself, and are relatively flexible, but it is also somewhat cumbersome. Example V adopts SPCU devices and PCB devices with a slot recognition function, a PLC network configuration process is simplified, and the station opening efficiency can be effectively improved. The slot recognition technology can guarantee the consistency between physical slots of SPCUs and PCBs and subsequent communication addresses, thereby guaranteeing the uniqueness when slot numbers are directly used as Panld and the consistency of networking Panld of SPUs connected thereto.

Example V is a network configuration process for the preset node template in the present application, and has the following steps 1 to 6:
Step 1: an opening configuration APP on a mobile phone is operated; and 2 virtual templates are selected for scanning the SPUs.
Step 2: a method of entering information one by one and installing device one by one is adopted, including:
   step 2.1: a first SPU-type template is selected;
   step 2.2: a barcode or QR code label of an SPU device to be installed is scanned to obtain a device DSN;
   step 2.3: the SPU device is installed;
   step 2.4: scanning and mesh filling of all devices on the two templates are completed in sequence;
   step 2.5: the SPCUs and the PCBs are actually installed, and their slot numbers are recorded; and
   step 2.6: on the first SPU-type template, a group number mark is made according to slot numbers of the SPCUs physically connected with the SPUs, for example, if the slot number of an SPCU is 5#, then the SPUs on this template are marked as 5# uniformly; and similarly, SPUs on the second template are also marked according to the slot numbers of the SPCUs.
Step 3: according to an operation guidance, information such as DSNs, PVSNs and PVMs is obtained.
Step 4: according to an operation guidance, generation of a general network configuration table is operated.
Step 5: according to an operation guidance, the mobile phone and a CSU are connected through a USB or wifi, and the general network configuration table in the APP is imported into the CSU; the CSU receives the general network configuration table, and acquires serial numbers of the SPCUs and the PCBs according to the physical slots, thereby perfecting overall networking configuration information; and the CSU automatically distributes the table to respective SPCUs, and then the respective SPCUs automatically distribute the table to respective PCBs and SPU, so that the system configuration is completed.
Step 6: after completing the configuration, the devices are reset to run normally.

In one embodiment, if the CSU reminds that there are node devices which are missed and not entered through audible and visual alarms, opening personnel verify by referring to the templates, and supplement information entry, so as to ensure the correct and complete configuration.

In the method of this example, acquisition of the serial numbers and perfection of networking parameters are automatically completed through the device slot recognition technology without scanning and recognizing the SPCUs and the PCBs, an engineering operation flow is simplified, and the station opening efficiency can be further improved.

In addition, referring to Fig. 14, an embodiment of the present application further provides a data processing terminal. The data processing terminal 2000 includes a memory 210, a processor 220 and a computer program stored on the memory 210 and capable of running on the processor 220.

The processor 220 and the memory 210 may be connected through a bus or other means.

As a non-transitory computer-readable storage medium, the memory 210 may be configured to store non-transitory software programs and non-transitory computer-executable programs. In addition, the memory 210 may include a high-speed random access memory, and may also include a non-transitory memory, such as at least one disk storage device, a flash memory device, or other non-transitory solid-state storage devices. In some implementations, the memory 210 may include a memory which is remotely disposed relative to the processor 220, and the remote memory may be connected to the processor 220 through a network. Instances of the above network include but are not limited to the Internet, the Intranet, a local area network, a mobile communication network and a combination thereof.

The embodiments described above are merely illustrative. The units described as separate components may or may not be physically separated, that is, they may be located in one place, or distributed to multiple network units. Some or all of the modules may be selected according to actual needs to achieve the objectives of the solutions of the embodiments.

In addition, an embodiment of the present application further provides a computer-readable storage medium, storing computer-executable instructions. The computer-executable instructions are executed by one center supervise unit or controller, such as one center supervise unit in the above device embodiments, so that the above center supervise unit is enabled to execute the data processing method for the photovoltaic system in the above embodiments.

In addition, an embodiment of the present application further provides a computer program product, including computer programs or computer instructions which are stored in a computer-readable storage medium. A center supervise unit of a computer device reads the computer programs or the computer instructions from the computer-readable storage medium, and the center supervise unit executes the computer programs or the computer instructions, such that the computer device executes the data processing method for the photovoltaic system in any aforementioned embodiment.

The data processing method for the photovoltaic system provided by the embodiment of the present application at least has the following beneficial effects: a layout image including a plurality of information entry areas is acquired, identification information carried in the information entry areas and a position relationship of the information entry areas are identified to obtain area serial numbers, serial number information, grouping information and photovoltaic coordinate information of the information entry areas, and thus node categories in the photovoltaic system can be distinguished according to the area serial numbers, a grouping condition of nodes in the photovoltaic system is obtained according to the grouping information, and device information and the position relationship in the photovoltaic system are obtained. Finally, the grouping information, the area serial numbers, the photovoltaic coordinate information and the serial number information are sent to a center supervise unit, so that the center supervise unit can generate a network configuration table according to the grouping information, and distribute, according to the network configuration table, to smart protocol convert units configuration information corresponding to smart photovoltaic units, photovoltaic convergence boxes and the smart protocol convert units. The photovoltaic system is managed by the center supervise unit, and the management efficiency for the photovoltaic system is improved.

In addition, functional units in respective embodiments of the present application may be integrated into one processing unit, or each of the units may exist alone physically, or two or more units may be integrated into one unit. The above integrated unit may be implemented in the form of hardware or in the form of hardware and software functional units.

Those of ordinary skill in the art can understand that all or some of the steps and systems in the method disclosed above may be implemented as software, firmware, hardware, and appropriate combinations thereof. Some or all physical components may be implemented as software executed by a center supervise unit, such as a central center supervise unit, a digital signal center supervise unit, or a micro-center supervise unit, or as hardware, or as an integrated circuit, such as an application-specific integrated circuit. Such software may be distributed on a computer-readable medium, which may include a computer storage medium (or non-temporary medium) and a communication medium (or temporary medium). As is well known to those of ordinary skill in the art, the term computer storage medium includes volatile and non-volatile, and removable and non-removable media implemented in any method or technology for storing information, such as computer-readable instructions, data structures, program modules, or other data. The computer storage medium includes, but is not limited to, a RAM, a ROM, an EEPROM, a flash memory or other memory techniques, a CD-ROM, a digital versatile disc (DVD) or other optical disk storage, a magnetic cassette, a magnetic tape, magnetic disk storage or other magnetic storage apparatuses, or any other media that can be used to store desired information and can be accessed by a computer. In addition, it is well known to those of ordinary skill in the art that a communication medium typically includes computer-readable instructions, data structures, program modules, or other data in modulated data signals such as carriers or other transmission mechanisms, and may include any information delivery medium.

## Claims

1. A data processing method for a photovoltaic system, the photovoltaic system comprising a center supervise unit as well as smart photovoltaic units, photovoltaic convergence boxes and smart protocol convert units used as nodes for networking, and the data processing method comprising:
acquiring a layout image, the layout image comprising a plurality of information entry areas carrying identification information;
identifying the identification information in the information entry areas, so as to obtain area serial numbers, serial number information and grouping information of the information entry areas, wherein the area serial numbers are used to distinguish between node categories in the photovoltaic system, the serial number information is used to represent serial numbers of nodes, and the grouping information is used to represent a grouping condition of nodes in the photovoltaic system;
identifying a position relationship of the information entry areas, so as to obtain photovoltaic coordinate information of the information entry areas; and
sending the grouping information, the area serial numbers, the photovoltaic coordinate information and the serial number information to the center supervise unit in the photovoltaic system, so that the center supervise unit generates a network configuration table according to the grouping information, and distributes, according to the network configuration table, to the smart protocol convert units configuration information corresponding to the smart photovoltaic units, the photovoltaic convergence boxes and the smart protocol convert units.

2. The data processing method for the photovoltaic system according to claim 1, wherein acquiring the layout image comprises:
acquiring an image of an original template of the photovoltaic system, wherein the original template is provided with a plurality of meshes according to a preset row-column relationship, and the area serial numbers, the serial number information and the grouping information are entered into the meshes to form the information entry areas; and
preprocessing the image to obtain the layout image.

3. The data processing method for the photovoltaic system according to claim 2, wherein preprocessing the image to obtain the layout image comprises:
identifying the image to obtain a plurality of positioning holes around the image; and
positioning the meshes according to the positioning holes to obtain the layout image.

4. The data processing method for the photovoltaic system according to claim 3, wherein the preset row-column relationship comprises M rows and N columns into which the layout image is divided in a region defined by the positioning holes.

5. A data processing method for a photovoltaic system, the photovoltaic system comprising a center supervise unit as well as smart photovoltaic units, photovoltaic convergence boxes and smart protocol convert units used as nodes for networking; and the data processing method comprising:
acquiring serial numbers of the smart photovoltaic units, serial numbers of the photovoltaic convergence boxes and serial numbers of the smart protocol convert units;
obtaining mesh coordinates according to positions of meshes in a preset node template;
entering, according to the mesh coordinates, the serial numbers of the smart photovoltaic units, the serial numbers of the photovoltaic convergence boxes and the serial numbers of the smart protocol convert units into meshes in different preset node templates;
receiving a numbering request sent by a user, wherein the numbering request is used to number meshes in the preset node template after entering to obtain numbering information;
identifying meshes in the preset node template according to the numbering information and the mesh coordinates, to obtain grouping information, serial number information, area serial numbers and photovoltaic coordinate information of the preset node template, wherein the grouping information is used to represent a grouping condition of nodes in the photovoltaic system; and
sending the grouping information, the serial number information, the area serial numbers and the photovoltaic coordinate information to the center supervise unit in the photovoltaic system, so that the center supervise unit generates a network configuration table according to the grouping information, and distributes, according to the network configuration table, to the smart protocol convert units configuration information corresponding to the smart photovoltaic units, the photovoltaic convergence boxes and the smart protocol convert units.

6. The data processing method for the photovoltaic system according to claim 5, wherein the preset node template comprises a photovoltaic unit template, a photovoltaic convergence template and a protocol convert template, and the mesh coordinates comprise photovoltaic mesh coordinates, convergence mesh coordinates and protocol mesh coordinates; and obtaining the mesh coordinates according to positions of meshes in the preset node template comprises:
obtaining the photovoltaic mesh coordinates according to positions of meshes in the photovoltaic unit template;
obtaining the convergence mesh coordinates according to positions of meshes in the photovoltaic convergence template; and
obtaining the protocol mesh coordinates according to positions of meshes in the protocol convert template.

7. The data processing method for the photovoltaic system according to claim 6, wherein entering, according to the mesh coordinates, the serial numbers of the smart photovoltaic units, the serial numbers of the photovoltaic convergence boxes and the serial numbers of the smart protocol convert units into the meshes in the different preset node templates comprises:
entering, according to the photovoltaic mesh coordinates, the serial numbers of the smart photovoltaic units into meshes in the photovoltaic unit template;
entering, according to the convergence mesh coordinates, the serial numbers of the photovoltaic convergence boxes into meshes in the photovoltaic convergence template; and
entering, according to the protocol mesh coordinates, the serial numbers of the smart protocol convert units into meshes in the protocol convert template.

8. The data processing method for the photovoltaic system according to claim 6, wherein identifying meshes in the preset node template according to the numbering information and the mesh coordinates, to obtain the grouping information, serial number information, area serial numbers and photovoltaic coordinate information of the preset node template comprises:
performing image identification on meshes in the preset node template, to obtain the serial number information;
obtaining, according to the numbering information, the grouping information of meshes in the preset node template;
obtaining, according to the grouping information, the area serial numbers, wherein the area serial numbers are used to represent a correspondence relationship between meshes in the preset node template and the smart photovoltaic units; and
obtaining, according to the mesh coordinates of the preset node template, the photovoltaic coordinate information, wherein the photovoltaic coordinate information is used to represent a correspondence relationship between the photovoltaic mesh coordinates and the mesh coordinates.

9. A data processing terminal, comprising at least one processor and a memory used for communication connection with the at least one processor, wherein the memory stores instructions executable by the at least one processor, and the instructions are executed by the at least one processor to enable the at least one processor to execute the data processing method for the photovoltaic system according to any one of claims 1 to 8.

10. A computer-readable storage medium, storing computer-executable instructions, wherein the computer-executable instructions are used to enable a computer to execute the data processing method for the photovoltaic system according to any one of claims 1 to 8.
